(19) Europäisches Patentamt

European Patent Office

Office européen des brevets

(11) **EP 0 317 218 B1**

(12) **EUROPEAN PATENT SPECIFICATION**

(45) Date of publication and mention
of the grant of the patent:
**28.01.1998 Bulletin 1998/05**

(51) Int Cl.⁶: **G06T 1/20**

(21) Application number: **88310682.5**

(22) Date of filing: **11.11.1988**

(54) **Serial video processor and method**

Serieller Videoprozessor und Verfahren

Processeur vidéo série et méthode

(84) Designated Contracting States:
**DE FR GB NL**

(30) Priority: **13.11.1987 US 119889**
**13.11.1987 US 119890**

(43) Date of publication of application:
**24.05.1989 Bulletin 1989/21**

(73) Proprietor: **TEXAS INSTRUMENTS**
**INCORPORATED**
**Dallas Texas 75265 (US)**

(72) Inventors:
 • **Childers, Jimmie D.**
 **Missouri City Texas 77489 (US)**
 • **Hyslop, Adin**
 **Houston Texas 77077 (US)**

(74) Representative: **Abbott, David John et al**
**Abel & Imray**
**Northumberland House**
**303-306 High Holborn**
**London, WC1V 7LH (GB)**

(56) References cited:
**GB-A- 2 129 589**

 • **13TH ANNUAL INTERNATIONAL SYMPOSIUM
 ON COMPUTER ARCHITECTURE, Tokyo, 2nd -
 5th June 1986, pages 338-345; A.L. FISHER:
 "Scan line array processors for image
 computation"**
 • **IEEE PROCEEDINGS VLSI AND COMPUTERS,
 Hamburg, 11th - 15th May 1987, pages 543-546;
 P- GENESTIER et al.: "Reconfiguration
 strategies for yield improvement of complex
 nodes in wafer scale integration of 2D processor
 arrays"**
 • **ELECTRONIC DESIGN, October 31, 1984, pages
 207-218; R. Davis et al.: "Systolic array chip
 matches the pace of high-speed processing"**

EP 0 317 218 B1

**Description**

BACKGROUND OF THE INVENTION

This invention relates to digital signal processor systems, and more particularly to a serial processor especially useful for video signal processing or the like.

Real-time processing of video signals such as standard TV, for image enhancement or the like, requires a massive amount of data handling and processing in a short time interval. One method heretofore proposed for image processing uses an array of single-bit microprocessors as set forth by Davis et al in Electronic Design, October 31, 1984, pp. 207-218, and a series of articles following this publication, particularly Electronic Design. Nov. 15, 1984, pp. 289-300. Nove. 29, 1984, pp. 257-266, Dec. 13, 1984, pp. 217-226, and Jan. 10, 1985, pp. 349-356. In order to process video in real time, this system used an array of 48x48 processor elements, actually formed by 32 chips with 6x12 processor elements per chip. Each processor element was connected for data transfer to its four adjacent elements, North, South, East and West and included a RAM having data inputs and outputs having an address input; a serial ALU having a plurality of one-bit registers and multiplexer means to connect inputs and outputs of each said registers to data inputs and outputs of said RAM, the multiplexer means also connecting inputs and outputs of some of the registers to the serial ALU of adjacent processors; control inputs in common with all of said processors receiving control and address sets of bits to select operation of the multiplexer means and addressing of said RAM to thereby perform one-bit serial arithmetic/logic operations in each of the processors for each set of control and address bits; and control means having a multi-bit parallel output connected in common to said control inputs of all of said serial processors to apply sequences of sets of control and address bits to said control inputs to result in real-time processing of said multi-bit video data. Such a structure required a very large number of interconnections between processors and between chips, resulting in expensive equipment of limited capability and questionable reliability. In 13TH ANNUAL INT. SYMP. ON COMPUTER ARCHITECTURE, TO-KYO 1986, pages 338-345; A.L. Fisher: "Scan line array processors for image computation", a method of real-time processing of video signals in a linear array of serial processors is disclosed comprising the steps of: converting the video signal to multi-bit digital data at a sampling rate; performing in each of said processors a plurality of serial arithmetic/logic operations on said digital data; and transferring the processed digital data in parallel to the output.

It is the primary object of this invention to provide an improved video signal processor or the like, in particular a processor capable of real-time processing of video signals. Another object is to provide an image processor capable of performing convolutions or similar algorithms on large amounts of data in real time. A further object is to provide a linear array of serial processors configured to do convolutions or the like on all pixels of a scan line at the same time. An additional object is to provide a lower-cost and more reliable processor of the type useful for video signal processing or image enhancement.

SUMMARY OF THE INVENTION

According to one aspect of the present invention there is provided a serial video processor system for high-speed processing comprising:

an input for receiving digitized, multi-bit signal data;
a linear array of one-bit serial processors, each processor having: an input register connected to receive multiple bits of said multi-bit signal data in parallel from said input; and output register connected to transfer multiple bits of processed data from the processor in parallel; a random access memory having data inputs and outputs connected to said input and output registers and having an address input; a serial ALU having a plurality of one-bit registers and multiplexer means to connect inputs and outputs of each said registers to data inputs and outputs of said random access memory, the multiplexer means also connecting inputs and outputs of some of the registers to the serial ALU of adjacent processors in a linear sequence; control inputs in common with all of said processors receiving control and address sets of bits to select operation of the multiplexer means and addressing of said random access memory thereby to perform one-bit serial arithmetic/logic operations in each of the processors for each set of control and address bits;
commutator means addressing the input registers of said plurality of processors in a repeating sequence correlated with said signal data to load said multi-bit signal data from said input into said input registers; said commutator means also addressing the output registers of said plurality of processors in a repeating sequence to transfer processed multi-bit video data to an output;
control means having a multi-bit parallel output connected in common to said control inputs of all of said processors to apply sequences of sets of control and address bits to said control inputs to result in high speed processing of said multi-bit signal data.

According to another aspect of the present invention there is provided a method of high-speed signal processing in a linear array of one-bit serial processors, said method comprising the steps of:

converting an input signal into multi-bit digital data at a sampling rate, and storing said digital data in a multiple bit manner in parallel in a set of input registers,
transferring the digital data in said registers to memory cells of a linear sequence of random access memories,
performing in each of said one-bit serial processors a plurality of serial arithmetic/logic operations on said digital data in adjacent ones of said sequence of random access memories, there being a corresponding one processor random access for each of said input registers,
transferring the processed digital data from said set of random access memories to a set of output registers, there being a number of said output registers corresponding to said number of input registers, and
transferring in a multiple bit manner in parallel said processed digital data from said output registers to an output.

In accordance with one embodiment of the invention, a system for real-time digital processing of a video signal is disclosed, using a linear array of a large number of one-bit serial processor elements, each operating on one pixel of a horizontal scan. The video signal is converted to digital by an A-to-D converter, and one full scan line is stored in a set of input registers, one register for each processor element. All of these input registers are loaded during a horizontal scan, as the input registers are addressed in sequence by a commutator. Each processor element includes a one-bit binary adder, a set of one-bit registers, and two one-bit wide data memories of a size to store data from several scans. There is no physical connection to tne "North and South" processor elements, but instead the data memories provide this function. The processor elements are all controlled in common by stored microcide, or by a sequencer, a state machine or a processor. The processed video data is transferred to an outputs register for each processor element, from which it is off-loaded in sequence defined by a commutator, then converted to a video signal by a D-to-A converter. A frame memory may be used to save a processed frame for use in convolving the next frame; the input of the frame memory is taken at the output registers, and the frame memory output is applied to the input registers.

The serial processor elements are configured as a linear array, and laid out in a semiconductor integrated circuit in a regular pattern, similar to a dynamic RAM, with one column for each element. The column contains the two data memories, the input and output registers, the commutator, and the adder and its register set.

The processor is illustrated as being used for video signal enhancement, but it is also useful for image processing in general, character recognition, signal processing, filtering, and applications of this type.

BRIEF DESCRIPTION OF THE DRAWINGS

The novel features believed characteristic of the invention are set forth in the appended claims. The invention itself, however, as well as other features and advantages thereof, will be best understood by reference to the detailed description which follows, read in conjunction with the accompanying drawings, wherein:

Figure 1 is an electrical diagram in block form of one example of a video system which uses the serial video processor according to the invention;
Figure 2 is an electrical diagram in block form of the serial video processor on the system in Fig. 1;
Figure 3 is an electrical diagram in block form in more detail of the serial video processor of Figs. 1 or 2;
Figure 4 is an electrical diagram in schematic form of the registers, multiplexers, circuits, and ALU of the processor of Fig. 3;
Figure 5 is an electrical diagram in schematic form of the input and output registers of the processor element of Fig. 3;
Figure 6 is greatly-enlarged diagram of the layout of a semiconductor chip containing the processor of Fig. 3 or 4.
Figure 7 is an electrical diagram in block form of connections for using redundant processor elements.

DETAILED DESCRIPTION OF SPECIFIC EMBODIMENT

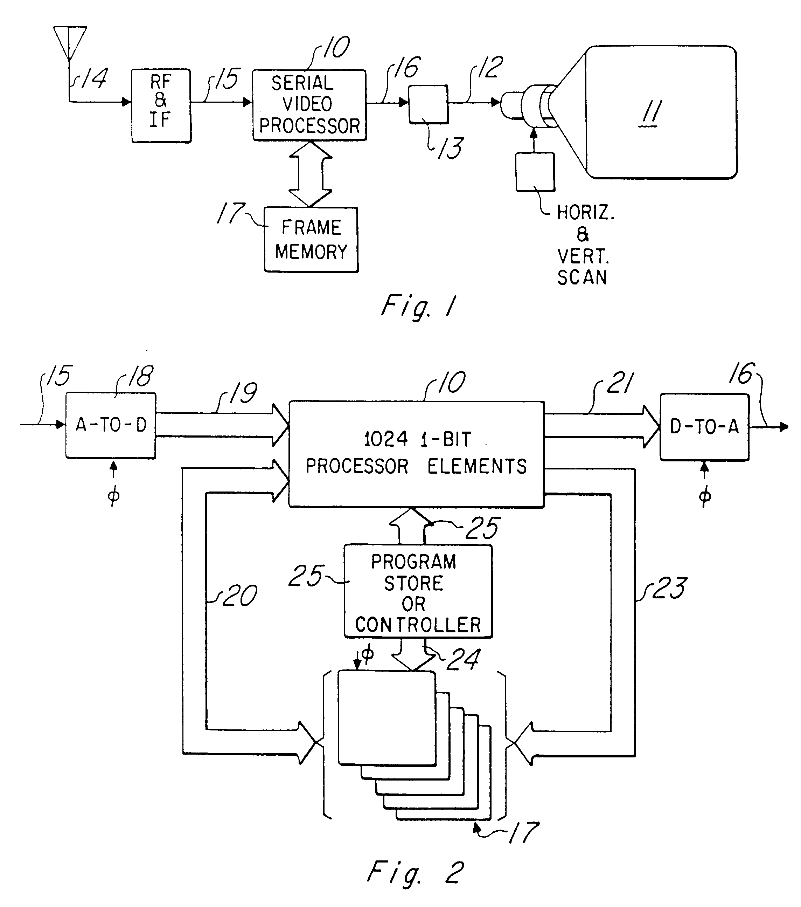

Referring to Fig. 1, a TV or video system which may use a serial video processor 10 according to the invention , in this example, consists of a CRT 11 of the raster-scanned type receiving an analog video signal at input 12 from standard video circuits 13 as used in a conventional TV set. A video signal from an antenna 14, or from a VCR or the like, is treated in the usual manner through RF and IF stages of a tuner, producing an analog composite video signal at a line 15. This analog input 15 is the same as would be the input 16 to the video circuitry 13, if the serial video processor 10 were not used, so it is seen that in this example the processor 10 is merely interposed in the signal stream at the output of the IF strip. The processor 10 functions to perform various signal enhancement operations on the video signal, and to this end would usually save one (or more) frames in a frame memory 17. The horizontal synch, vertical synch, and color burst would be recovered separately; i.e., would by-pass the signal processor illustrated herein, which deals only with the video signal, for illustrative purposes.

In Fig. 2, a block diagram of the serial video processor 10 and frame memory 17 is shown in more detail. The video signal input on line 15 is converted to 8-bit digitized video data in an A-to-D converter 18 which operates at a sampling rate of, for example, 14.32 MHz (a multiple X4 of the color subcarrier 3.58 MHz), producing an 8-bit parallel output on lines 19 as one input to the video processor 10. The other 8-bit data input 20 to the processor 10 is the output of the frame buffer memory 17, which stores the processed video data for the previous frame. The frame memory 17 may consist of a bank of video DRAMS as commercially available, or, since the random access function is not needed, frame memory devices with only serial I/O may be used. The processed video data is output from the video processor on eight lines 21 to an 8-bit digital-to-analog converter 22 which produces the input 16 to the video circuitry. The system illustrated as an example may be black and white or color, since the real-time image enhancement processing is done on the composite video signal. The processor can also perform the color separation, which will not be treated in this application. The processed video data is also applied by eight lines 23 to the input of the frame memory 17. The frame memory 17 also receives controls and clocking on lines 24 from the video processor 10 or from a controller 25. For relatively low speeds, controller 25 may be a standard microprocessor or microcontroller device such as a commercially-available TMS 7000, for example, as described in detail in U.S. Pat. 4,432,052. Or, for faster speeds, a higher speed controller may be needed; the code can be stored in RAM or ROM, or a state machine or sequencer of conventional form may be employed. The controller 25 functions to apply twenty-one microcode control bits and sixteen address bits on lines 26 to the video processor. Indeed, the program store or controller 25 may be on the same semiconductor chip as the video processor 10, especially if it merely consists of stored code in a ROM with associated address counter.

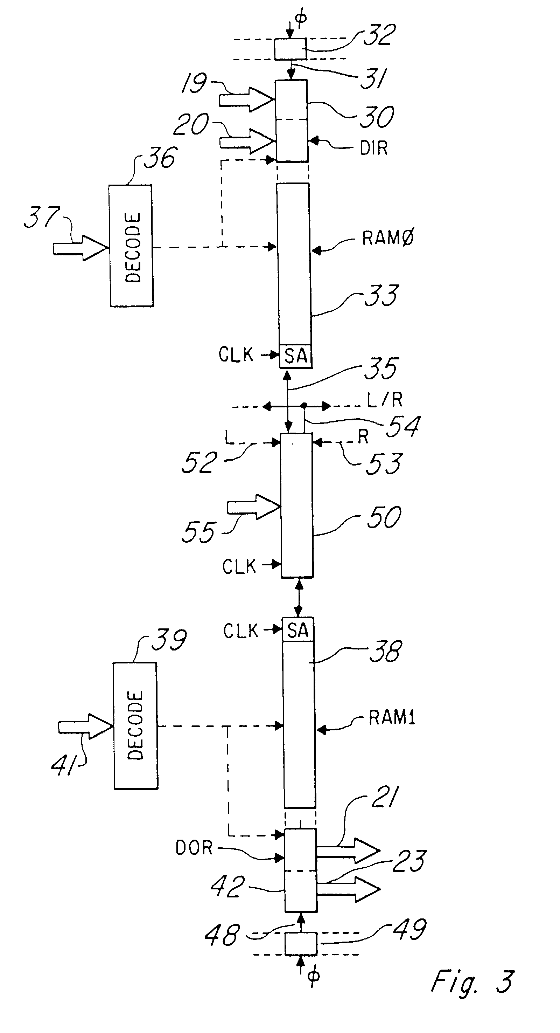

Referring to Fig. 3, an example of one of the serial processor elements contained in the serial video processor 10 is illustrated. The video processor 10 may contain, for example, 1024 identical processor elements as shown in Fig. 3, in a linear array. Each processor element includes a 16-bit data input register 30 receiving the two 8-bit parallel inputs 19 and 20 from the A-to-D converter and from the frame memory 17; the input register 30, also referred to as the DIR register, loads the data on lines 19 and 20, only when an enable signal is applied at an input 31, this enable signal being received from a 1-of-1024 commutator or ring counter 32 triggered to begin at the end of a horizontal blanking period and continue for 1024 cycles synchronized with the sampling frequency of the A-to-D converter 18. The sixteen bits of the register 30 are also addressed one at a time by an address input from the controller 25 as will be described, for selection to write into a data memory 33; this data memory 33 is referred to as RAM0 and consists of a 128-bit dynamic random-access memory configured 1x128. Actually, the RAM0 data memory 33 and the DIR input register 30 are parts of the same 1x144 DRAM column, but the register 30 differs from the RAM0 part in that the DIR part is dual ported so it can be written into from the inputs 19 and 20, all sixteen bits in parallel. The 1-bit data input/output line 35 for RAM0 is coupled to the column or bit-line I/O for a sense amplifier of a DRAM column. The particular bit being addressed in the 1x128 memory RAM0 part of the column is selected by 128 word lines shared by all 1024 processor elements; a shared 1-of144 decode 36 receives an 8-bit address 37 (actually seven address bits and one of the twenty-one control bits) from the controller 25 and applies the same word line selection to RAMO or DIR of all 1024 processor elements. Likewise, a second one-bit wide dynamic memory 38, referred to as RAM1, is used on the output side of the processor, again having a shared decoder 39 producing a 1-of-144 word line selection from an 8-bit address on lines 41 from controller 25. The RAM1 memory is associated with a 16-bit data output register 42 also called DOR, also addressed by a 1-of-16 selection from the shared decoder 39. The addresses 37 and 41 for the input and output registers 30 and 42 and data memories 33 and 38 are each 8-bit inputs 37 and 41 to decoders 36 and 39, shared by all 1024 processor elements, these inputs 36 and 39 being generated by the controller 25. The output register 42 is selected for 16-bit parallel data output on lines 21 and 23 by an input 48 from a 1-of-1024 commutator or ring counter 49. The input commutator 32 is clocked at above 1024 times the horizontal scan rate, so all 1024 of the input registers 30 can be loaded during a horizontal scan period. The output commutator 49 maybe clocked at the same rate as the input.

The processor element of Fig. 3 includes an ALU and register set 50 which functions to perform one-bit arithmetic/logic functions on one-bit inputs from RAMO and RAM1, and to write the one-bit result to RAMO or RAM1, or alternatively, the one-bit 10 of the ALU 50 may be the adjacent "East and West" processor elements on either side via left or right data inputs 52 or 53, or left/right data output line 54. The one-bit arithmetic/logic function is defined by a 22-bit microcode control input 55 from the controller 25. In one clock cycle defined by a clock input CLK to the sense amplifiers of the data memories 33 and 38 and to the ALU 50, the processor element of Fig. 3 performs one of the operations of the instruction set described below on inputs from RAM0, RAM1, L or R. and applies the result to RAM0, RAM1, input only or output only, as selected by the microcode input 55 and addresses 37 and 41. This CLK input is at about 50nS repetition rate, or 20 MHz; it need not be correlated with the clocking of the commutators 32 and 49.

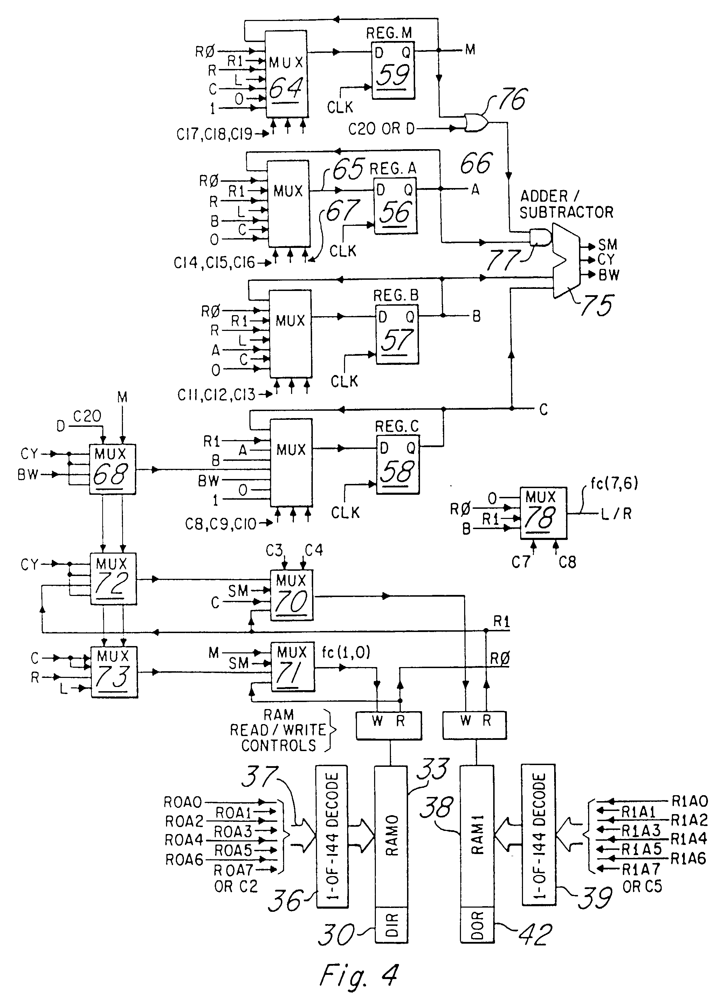

Referring to Fig. 4. the ALU and register set 50 of the processor element of Fig.3 is shown in more detail. In this block diagram, the selected conditional one-bit input from RAM0 or RAM1 is referred to as R0 or R1, the twenty-one microcode control bits are referred to as C0 to C20, the carry bit is CY, the borrow bit is BW, and the sum bit is SM.

Four one-bit clocked registers 56,57,58, and 59 are included, referred to as Register A, Register B, Register C and Register M; these are standard D flip-flop circuits having D and Q input/output terminals and a clock input CLK. Each of the registers 56-59 has a multiplexer 61,62,63 or 64 which is a 1-of-8 selector controlled by three respective bits of the microcode control bits 55 as indicated. Thus, the register 56 or Reg A, for example, receives a one-bit input on line 65 from its own output 66, or it receives R0 or R1, or the right or left lines 52 or 53, or the B or C registers, or a hard-wired zero, as selected by three bits C14-C16 from the controller 25 on lines 67, depending upon the binary value 000 thru 111 of this control input. Registers B, C and M are likewise controlled. The Register C has an additional multiplexer 68 referred to as the divide multiplexer, as one of the inputs of its multiplexer 63, receiving the control bits C20 and the Reg M output M as its selector bits. Input for the RAM0 data memory 33, and for the RAM1 data memory 38, is controlled by the RAM0 and RAM1 write control multiplexers 70 and 71. Conditional multiplexers 72 and 73 responsive to the C20 control bit and the Reg M output provide a data-dependent write input for RAM0 and RAM1. The R0 and R1 bits used as the inputs of multiplexers 61,62,63 and 64 are the "read" outputs for RAM0 and RAM1. Each of the multiplexers 70, 71, 72 and 73 is a 1-of-4 selector receiving two control bits C0,C1,C3,C4, C20 or M as indicated. Control bits C2 and C5 are the same as address bits A7 for RAM0 and RAM1, and are used to select the DIR or DOR registers instead of RAM0 and RAM1 for data transfer. The ALU itself consists of a binary full adder/subtractor 75, and two-input OR and AND gates 76 and 77, all receiving inputs A, B, C, M and C20 (or D) as indicated and producing outputs Sum SM. Carry Cy and Borrow BW as shown. A left/right control L/R is produced by a one-of-4 multiplexer 78 based upon the inputs R0, R1, B and logical zero, as selected by control bits C6 and C7.

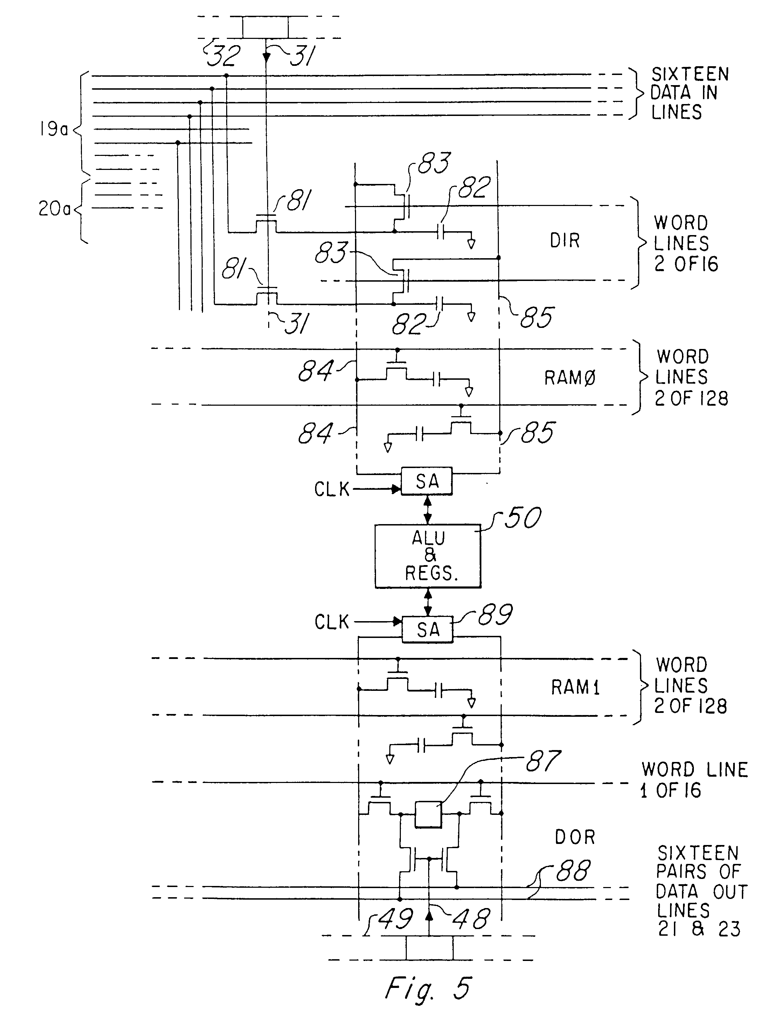

The dual-port input registers 30 are illustrated in Fig. 5, wherein the pointer input 31 from the commutator 32 is seen to dirve a set of sixteen input transistors 81 which connect sixteen data lines 19a and 20a (from the parallel inputs 19 and 20) to dynamic memory cells 82. These cells are dual-port, and are also written to or read from through access transistors 83 and folded bit lines 84 and 85 connected to sense amplifier 86, when addressed by word lines 86. There are sixteen of the word lines 86, and 128 of the word lines 87 for the RAM0 part of this 144-bit dynamic RAM column. There should be no conflict in the processor trying to write to the cells 82 while they are being read from, because the DIR is loaded to the RAM0 part (and simultaneously the RAM1 part is transferred to the DOR part) only in the thirty-two processor cycles immediately following completion of a horizontal scan; the program stored in controller 25 is written to avoid the conflict, but in any event in video processing there would be no noticeable effect even if a random bit of indeterminate data was introduced, especially after the convolution algorithm.

The dual-port output registers 42 are also illustrated in Fig. 5, and these are the same as the input registers except static cells 87 are used, since the cells have to drive long data and data-bar pairs of lines 88. Again, conflicts between reading out to lines 21,23, and writing to the cells 87 from sense amplifer 89 may be resolved by the stored program; only the thirty-two cycles just after a horizontal scan are used to load DOR from RAM1.

The processor element 50 of Figures 3 and 4 provides an instruction set as set forth below as Table A. In formina the instructions of tne instruction set, it is understood that each of the registers A,B,C,M and the ALU 75 can perform simultaneous operations. For example, an operation expressed as:

$$0 > A : A > B : R0(123) > C : M > M : SM > R1(27) : B > GO$$

implies the following simultaneous events:

| | |
|---|---|
| 0 > A | load register A with 0 (zero) |
| A > B | load register B with the contents previously in A |
| R0(123) > C | move data from RAMO address 123 to register C |
| M > M | this is a N0-0P (do nothing) instruction for register M |
| SM > R1(27) | write result of the addition into RAM1 address 27 |
| B > G0 | output register B onto GLOBAL OUTPUT line |

The basic format of an instruction is:

Source > Destination : Source > Destination : ...

The right arrow '>' indicates direction of data flow, and the colon ':' separates statements to be performed simultaneously (same clock cycle). A new line indicates a new clock cycle.

| A, xB, C, M | Are registers | |
|---|---|---|
| SM, Cy, BW | Are ALU outputs | |
| xR0(n) | RAM0, address n, | 0 <= n <= 127 |
| xINP(m) | Data Input Register DIR, bits 0-15 | 0 <= m <= 15 |

(continued)

| xR1(n) | RAM1, address n, | 0 <= n <= 127 |
| xOUT(m) | Data Output Register DOR,bits 0-15, | 0 <= m <= 15 |
| GO | Global output line | |

where:

| x = blank | Immediate cell (i.e., processor element) is source/destination |
| x = L | Cell to left of immediate cell is source/destination |
| x = R | Cell to right of immediate cell is source/destination |

A source may be specified more than once in a command line: that is, "A > B : A > C" is legal. However, a destination mdv be specified only once in a command line: that is, "A > B : B > C" is legal; but "A > C : B > C" is not legal.

Each memory bank may be specified more than once as a source: "R0(13) > A " R0(13) > B" is legal (same address); but "R0(13) > A : R0(100) > B" is not legal (same bank, different adder); while "R0(13) > A : R1(100) > B" is legal (different bank). Each of the banks RAM0 or RAMI may be specified as a destination only once: that is "A > R0 (13) : B > R0(13i" is not legal; but "A > RO(13) : B > R1(13)" is legal.

If a bank RAMO or RAMI is specified as a source and a destination, the source and destination address must be the same: that is, "R0(22) > C : C > R0(123)" is not legal (same bank, different address); but :R0(22) > B : SM > R0 (22)" is legal (read/modify/write); and "R0(22) > C : C > R1(123)" is legal. Any of these rules set forth above for xR0 (n) and Xr1(n) applies to the xINP(m) and xOUT(m) instructions as well, with the exception that the address range of 'n' is 0 to 127 while 'm' is 0 to 15. In each case, ALL references to the characters R0 may be replaced with INP and the characters R1 may be replaced with OUT. That is, if "R0(10) > B : SM > R0(10)" is legal, then: "INP(10) > B : SM > INP(10)" is also legal. Or, "R0(10) > B : SM > INP(10)" is not legal, but "R1(25) > B : SM > INP(10)" is legal (different bank).

Using the instruction set as explained above and in Table A, examples of software algorithms for fixed point arithmetic are set forth in Table B. These examples arbitrarily use eight bits as the source number size: however, the numbers may be any length from one bit to whatever can be accumulated in two banks of 128 bits. This varies according to the operation but is at least 63 bits. Note that in the instruction examples of Table B, C20 is referred to as 'D': "0 > D" is equivalent to "C20 = 0".

The table below shows the processing speed and required clock cycles of some of these fixed point operations; while eight bit examples are given, there is nothing significant about the word length in principle.

| 8-bit Operation | | Clock Cycles | Speed at 70 nS Cycle Time |
| --- | --- | --- | --- |
| * two's complement | | 8 | .56 uS |
| * absolute value | | 9 | .63 |
| * fixed point addition | RAM0 → RAM1 | 9 | .63 |
| * fixed point addition | RAM0 → RAM0 | 17 | 1.19 |
| * fixed point subtraction | RAM0 → RAM1 | 9 | .63 |
| * fixed point subtraction | RAM0 → RAM0 | 17 | 1.19 |
| * fixed point multiply | | 73 | 5.11 |
| * fixed point divide | | 131 | 9.17 |

Even though 0.63 microseconds are needed for a fixed-point addition of two 8-bit numbers (nine 70nS cycles), it should be recognized that 1024 of these are done simultaneously, so the effective rate is 0.6 nS. Similarly, the effective rate for an 8x8 multiply is 5 nS.

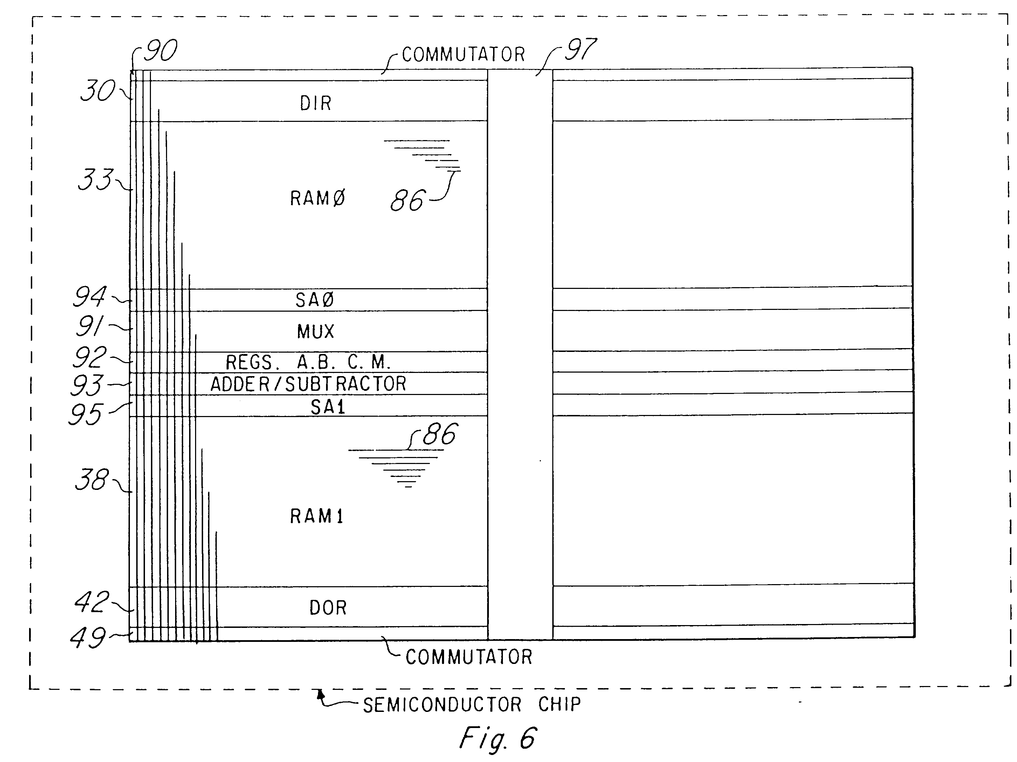

The serial video processor of Figs. 3 and 4 is constructed in a single integrated circuit for which the bar layout is shown in Fig. 6. Each of 1024 processor elements is a vertical strip 90 of the array, and each strip 90 is made up of the RAM0 memory 33, the RAM1 memory 38, the 16-bit data input register 30, the 16-bit data output register 42, the multiplexers 61,62,63,64,70,71,72,73 and 78 in the area 91, the registers 56,57,58 and 59 in area 92, the adder/subtractor 75 and gates 76,77 in area 93, along with sense amplifiers 86 and 89 in areas 94 and 95. The construction of the CMOS sense amplifiers and the folded-bit line DRAM cells is of the type shown in U.S. Pat. 4,630,240, issued to Poteet, et al, assigned to Texas Instruments, for example. The word lines 86 and 87 run horizontally across the bar from row decoders and word-line drivers located in area 97. The operation of the RAM0/DIR combination with the 1024 sense amplifiers 86 is like that of a standard dynamic RAM, but no column decode or column addressing is needed of course since all 1024 processor elements operate at one time, every clock cycle. The operation of the RAM1/DOR combination is the same, except the output registers 42 may use static cells. The shift pointers 32 and 49 are standard shift register bits connected as ring counters.

The configuration of this video processor as a linear array provides several advantages. By "linear array" is meant that the 1024 (or whatever number) processor elements operate simultaneously on a whole horizontal line at a time in parallel, each in a one-bit serial processor element. This allows the interconnections to the memory, processor elements, and nearest neighbors to be quite regular, allowing the device to be laid out like a memory chip. The linear array processing a line at a time does not require physical connections to data for pixels above and below since the necessary interim data from previous lines is maintained in the local processor memory RAM0 and RAM1, thus eliminating the excessive pin out or interconnect problem.

It is important that the processor of the invention does not require any massive shifting of data along the processor elements or memories for a given line; the data inputted via input register DIR for a given element stays in the memories RAM0 and RAM1 for this element until it has been processed via the ALU in the same processor element, and outputted via DOR. This technique allows the processor elements to spend virtually all of their time processing while the independently-clocked data-in and data-out registers DIR and DOR handle the I/O function. The processor element has only to transfer its own data to and from the outut and input registers prior to shifting.

The regularity in the linear layout reduces line lengths and parasitics to help minimize processor cycle time. This linear architecture of the serial video processor allows the length of the array (number of processor elements) to be arbitrarily lengthened during the design phase by stepping more elements and adjusting signal driver size for the larger load. The pin-out (number of pins for the semiconductor package) is not affected by the array length so that versions of the processor with more elements can be pin-compatible with smaller versions.

The feature of including two separate banks of independently-addressable RAM, that is RAM0 and RAM1, allows a complete addition or subtraction to be performed in a single clock cycle. Thus, it is not necessary to first load a register with the addend in one cycle and then perform the addition in a second cycle. In real-time TV enhancement, this is quite important in being able to achieve the throughput needed.

A very important feature is that the linear layout allows for implementation of redundancy of the memories, processor element and input/output registers. This is important due to the large amount of dynamic memory on the chip.

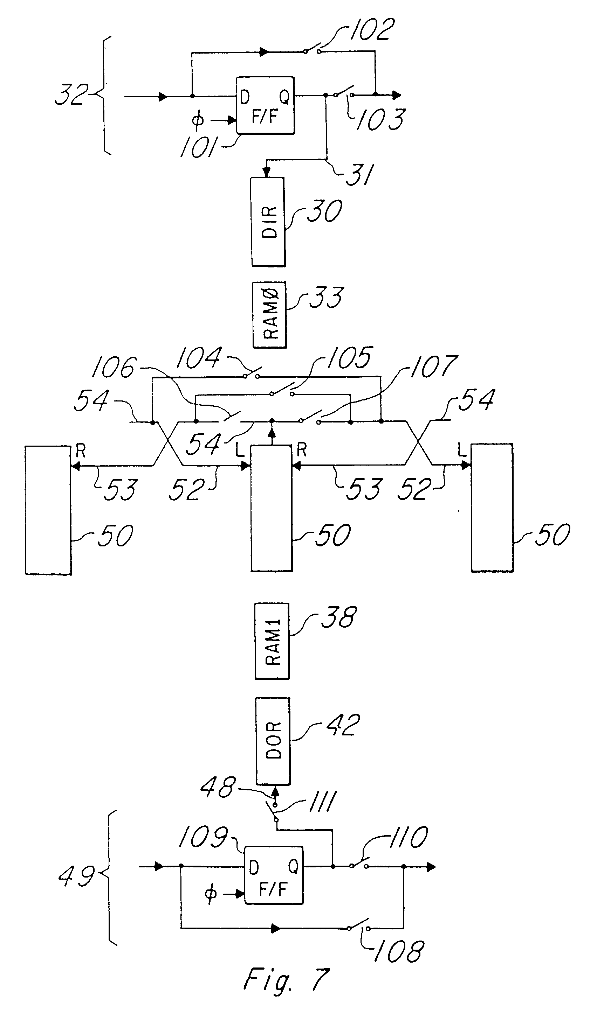

Referring to Fig. 7, redundancy is implemented by providing by-pass connections in the commutators 32 and 49, and in the processor elements 50, so that these parts may be omitted from operation of the unit. The DIR, RAM0, RAM1 and DOR need not have by-pass connections, because these parts are of no consequence when the pointers 31 and 48 do not address DIR and DOR for data loading and output. In Fig. 7, each cell or stage 101 of the commutator 32 has a normally-open by-pass switch 102, and a normally-closed series switch 103. These switches include conductors on the chip which may be shorted or blown by a laser, using methods of blowing laser fuses as commonly employed for memory devices having redundant rows and columns. Similarly, each processor element 50 contains normally-open switches 104 and 105 for the connection from L/R line 54 to the L input 52 of the next cell, and normally-closed switches 106 and 107 in series with the L/R output 54 that goes from this cell to the R input 53 of the left-hand element 50 and to the L input 52 of the right-hand element 50. The connections for the output register 42 include a normally-open bypass switch 108 for the stage 109 of the commutator 49, and normally-closed switches 110 and 111 in series with the line 40 and the connection from this stage 109 to the next one in the commutator. All of those switches are laser-blown fuses or the like. Thus, the chip is designed with a number of extra columns 90 or processor elements (of Fig. 3), all having the by-pass laser fuses of Fig. 7. For example, there may be eight extra so there would be 1032 when only 1024 are needed. The chip is tested, and faulty columns are by-passed by the laser fuse blowing operation while the slice containing the chips is still at the test station.

While this invention has been described with reference to an illustrative embodiment, this description is not intended to be construed in a limiting sense. Various modifications to the illustrative embodiment, as well as other embodiments of the invention, will be apparent to persons skilled in the art upon reference to this description.

## TABLE A

REGISTER A

The following are legal instructions for register A:

| MNEMONIC | OP-CODE | COMMENTS |
|---|---|---|
| register instructions | | |
| 0 > A | 1C000 | Logical 0 into A |
| A > A | 00000 | NO-OP |
| B > A | 14000 | Register B into register A |
| C > A | 18000 | Register C into register A |
| read instructions | | |
| R0(n) > A | 04000 | RAM0 address n into A, 0 < n < 127 |
| INP(m) > A | 04004 | DIR address m into A, 0 < m < 15 |
| R1(n) > A | 08000 | RAM1 address n into A |
| OUT(m) > A | 08020 | DOR address m into A |
| read from left cell into A / out to right cell's register A | | |
| LR0(n) > A | 10040 | Cell-Left RAM0 address n into A |
| LINP(m) > A | 10044 | Cell-Left DIR address m into A |
| LR1(n) > A | 10080 | Cell-Left RAM1 address n into A |
| LOUT(m) > A | 100A0 | Cell-Left DOR address m into A |
| LB > A | 100C0 | Cell-Left register B into A |
| read from right cell into A / out to left cell's register A | | |
| RR0(n) > A | 0C040 | Cell-Right RAM0 address n into A |
| RINP(m) > A | 0C044 | Cell-Right DIR address m into A |
| RR1(n) > A | 0C080 | Cell-Right RAM1 address n into A |
| ROUT(m) > A | 0C0A0 | Cell-Right DOR address m into A |
| RB > A | 0C0C0 | Cell-Right register B into A |

TABLE A (cont.)

REGISTER B

The following are legal instructions for register B:

| MNEMONIC | OP-CODE | COMMENTS |
|---|---|---|
| Internal to cell | | |
| 0 > B | 03800 | Logical 0 into B |
| B > B | 00000 | NO-OP |
| A > B | 02800 | Register A into register B |
| C > B | 03000 | Register C into register B |
| R0(n) > B | 00800 | RAM0 address n into B, 0 <= n <= 127 |
| INP(m) > B | 00804 | DIR  address m into B, 0 <= m <= 15 |
| R1(n) > B | 01000 | RAM1 address n into B |
| OUT(m) > B | 01020 | DOR  address m into B |
| | | |
| from left cell into B / out to right cell's register B | | |
| LR0(n) > B | 02040 | Cell-Left RAM0 address n into B |
| LINP(m) > B | 02044 | Cell-Left DIR  address m into B |
| LR1(n) > B | 02080 | Cell-Left RAM1 address n into B |
| LOUT(m) > B | 020A0 | Cell-Left DOR  address m into B |
| LB > B | 020C0 | Cell-Left register B into B |
| | | |
| from right cell into B / out to left cell's register B | | |
| RR0(n) > B | 01840 | Cell-Right RAM0 address n into B |
| INP(m) > B | 01844 | Cell-Right DIR  address m into B |
| RR1(n) > B | 01880 | Cell-Right RAM1 address n into B |
| ROUT(m) > B | 018A0 | Cell-Right DOR  address m into B |
| RB > B | 018C0 | Cell-Right register B into B |

9

## TABLE A (cont.)

REGISTER C

The following are legal instructions for register C:

| MNEMONIC | OP-CODE | | COMMENTS |
|---|---|---|---|
| register instructions | | | |
| 0 > C | 00600 | | Logical 0 into C |
| 1 > C | 00700 | | Logical 1 into C |
| C > C | 00000 | | NO-OP |
| A > C | 00200 | | Register A into register C |
| B > C | 00300 | | Register B into register C |
| CY > C | 00400 | | ALU Carry into register C |
| BW > C | 00500 | | ALU Borrow into register C |
| read instructions | | | |
| R1(n) > C | 00100 | | RAM1 address n into C |
| OUT(m) > C | 00120 | | DOR address m into C |
| write instructions | | | |
| C > R0(n) | 00001 | (1) | Register C into RAM0 address n |
| C > INP(m) | 00005 | | Register C into DIR address m |
| C > R1(n) | 00080 | | Register C into RAM1 address n |
| C > OUT(m) | 00280 | | Register C into DOR address m |

## TABLE A (cont.)

REGISTER M

The following are legal instructions for register M:

| MNEMONIC | OP-CODE | COMMENTS |
|---|---|---|
| Internal to cell | | |
| 0 > M | C0000 | Logical 0 into M |
| 1 > M | E0000 | Logical 1 into M |
| C > M | A0000 | Register C into register M |
| M > M | 00000 | NO-OP |
| R0(n) > M | 20000 | RAM0 address n into M, 0 <= n <= 127 |
| INP(m) > M | 20004 | DIR address m into M, 0 <= m <= 15 |
| R1(n) > M | 40000 | RAM1 address n into M |
| OUT(m) > M | 40020 | DOR address m into M |
| | | |
| from left cell into M / out to right cell's register M | | |
| LR0(n) > M | 80040 | Cell-Left RAM0 address n into M |
| LINP(m) > M | 80044 | Cell-Left DIR address m into M |
| LR1(n) > M | 80080 | Cell-Left RAM1 address n into M |
| LOUT(m) > M | 800A0 | Cell-Left DOR address m into M |
| LB > M | 800C0 | Cell-Left register B into M |
| | | |
| from right cell into M / out to left cell's register M | | |
| RR0(n) > M | 60040 | Cell-Right RAM0 address n into M |
| INP(m) > M | 60044 | Cell-Right DIR address m into M |
| RR1(n) > M | 60080 | Cell-Right RAM1 address n into M |
| ROUT(m) > M | 600A0 | Cell-Right DOR address m into M |
| RB > M | 600C0 | Cell-Right register B into M |

## TABLE B

A. ------- two's complement (change sign):

Two's complement of an 8 bit number in RAM0 addresses 7-0 with the result in the same locations.

```
clock
cycle                              mnemonics
```

```
   ;SUBTRACT NUMBER FROM ZERO
1) 0 > D : 1 > M      : 0 > A    : R0(0) > B : 0 > C    : SM > R0(0)
2) 0 > D : M > M      : A > A    : R0(1) > B : BW > C   : SM > R0(1)
3) 0 > D : M > M      : A > A    : R0(2) > B : BW > C   : SM > R0(2)
4) 0 > D : M > M      : A > A    : R0(3) > B : BW > C   : SM > R0(3)
5) 0 > D : M > M      : A > A    : R0(4) > B : BW > C   : SM > R0(4)
6) 0 > D : M > M      : A > A    : R0(5) > B : BW > C   : SM > R0(5)
7) 0 > D`: M > M      : A > A    : R0(6) > B : BW > C   : SM > R0(6)
8) 0 > D : M > M      : A > A    : R0(7) > B : BW > C   : SM > R0(7)
```

B. ------- absolute value :

Absolute value of an 8 bit two's complement number in RAM0 addresses 7-0 with the magnitude in RAM1 addresses 6-0 and the sign in R0(7).

```
   ;COMPLEMENT SIGN (RESULT IN C)
1) 0 > D : 1 > M      : R0(7) > A : 0 > B       : 1 > C
2) 0 > D :                                      : BW > C
   ;FIND MAGNITUDE; USE DIVIDE MODE'S CY/BW CONTROL, I.E., IF # < 0 THEN
   ;SUBTRACT IT FROM 0; IF # > 0 THEN ADD IT TO 0
3) 1 > D : C > M      : 0 > A    : R0(0) > B : 0 > C    : SM > R1(0)
4) 1 > D : M > M      : A > A    : R0(1) > B : CY > C   : SM > R1(1)
5) 1 > D : M > M      : A > A    : R0(2) > B : CY > C   : SM > R1(2)
6) 1 > D : M > M      : A > A    : R0(3) > B : CY > C   : SM > R1(3)
7) 1 > D : M > M      : A > A    : R0(4) > B : CY > C   : SM > R1(4)
8) 1 > D : M > M      : A > A    : R0(5) > B : CY > C   : SM > R1(5)
9) 1 > D : M > M      : A > A    : R0(6) > B : CY > C   : SM > R1(6)
```

TABLE B (cont.)

*C.* ------- fixed point addition:

Integer or signed two's complement addition of two 8 bit numbers located in
RAM0  addresses 7 - 0 and RAM1 addresses 17 - 10;  the sum  is  accumulated
back into RAM0 addresses 8 - 0.  Bit 8 is the Carry flag.

```
clock
cycle                                         mnemonics
        ;ADD NUMBERS BITWISE
    1)  0 > D : 1 > M      : R0(0) > A  : R1(10) > B : 0 > 'C      : SM > R0(0)
    2)  0 > D : M > M      : R0(1) > A  : R1(11) > B : CY > C      : SM > R0(1)
    3)  0 > D : M > M      : R0(2) > A  : R1(12) > B : CY > C      : SM > R0(2)
    4)  0 > D : M > M      : R0(3) > A  : R1(13) > B : CY > C      : SM > R0(3)
    5)  0 > D : M > M      : R0(4) > A  : R1(14) > B : CY > C      : SM > R0(4)
    6)  0 > D : M > M      : R0(5) > A  : R1(15) > B : CY > C      : SM > R0(5)
    7)  0 > D : M > M      : R0(6) > A  : R1(16) > B : CY > C      : SM > R0(6)
    8)  0 > D : M > M      : R0(7) > A  : R1(17) > B : CY > C      : SM > R0(7)
    9)                                              : CY > R1(8)
```

Integer or signed two's complement addition of two 8 bit numbers located in
RAM0  at  address  7 - 0 and 15 - 8;  the sum  is  accumulated  back  into
addresses 16 - 8.  Both source addresses in the same RAM bank is worst case
for addition.

```
clock
cycle                                         mnemonics
        ;FETCH ADDEND 'A'
    1)                          R0(0) > A
        ;FETCH ADDEND 'B', ADD, AND WRITE RESULT BACK
    2)  0 > D : 1 > M      : A > A       : R0(8) > B  : 0 > C        : SM > R0(8)
        ;MAINTAIN PREVIOUS CARRY BIT
    3)  0 > D : M > M      : R0(1) > A                : CY > C
    4)  0 > D : M > M      : A > A       : R0(9) > B  : C > C        : SM > R0(9)
    5)  0 > D : M > M      : R0(2) > A                : CY > C
    6)  0 > D : M > M      : A > A       : R0(10) > B : C > C        : SM > R0(10)
    7)  0 > D : M > M      : R0(3) > A                : CY > C
    8)  0 > D : M > M      : A > A       : R0(11) > B : C > C        : SM > R0(11)
    9)  0 > D : M > M      : R0(4) > A                : CY > C

   10)  0 > D : M > M      : A > A       : R0(12) > B : C > C        : SM > R0(12)
   11)  0 > D : M > M      : R0(5) > A                : CY > C
   12)  0 > D : M > M      : A > A       : R0(13) > B : C > C        : SM > R0(13)
   13)  0 > D : M > M      : R0(6) > A                : CY > C
   14)  0 > D : M > M      : A > A       : R0(14) > B : C > C        : SM > R0(14)
   15)  0 > D : M > M      : R0(7) > A                : CY > C
   16)  0 > D : M > M      : A > A       : R0(15) > B : C > C        : SM > R0(15)
   17)                                              : CY > R0(16)
```

TABLE B (cont.)

D. ------- fixed point subtraction:

Integer or signed two's complement subtraction of two 8 bit numbers located in RAM0 addresses 7 - 0 and RAM1 addresses 17 - 10; the difference is accumulated back into RAM0 addresses 8 - 0. Bit 8 is the Borrow flag.

```
clock
cycle                                        mnemonics
```

```
     ;SAME AS ADDITION EXCEPT USES BORROW EACH TIME
 1)  0 > D : 1 > M    : R0(0) > A  : R1(10) > B : 0 > C    : SM > R0(0)
 2)  0 > D : M > M    : R0(1) > A  : R1(11) > B : BW > C   : SM > R0(1)
 3)  0 > D : M > M    : R0(2) > A  : R1(12) > B : BW > C   : SM > R0(2)
 4)  0 > D : M > M    : R0(3) > A  : R1(13) > B : BW > C   : SM > R0(3)
 5)  0 > D : M > M    : R0(4) > A  : R1(14) > B : BW > C   : SM > R0(4)
 6)  0 > D : M > M    : R0(5) > A  : R1(15) > B : BW > C   : SM > R0(5)
 7)  0 > D : M > M    : R0(6) > A  : R1(16) > B : BW > C   : SM > R0(6)
 8)  0 > D : M > M    : R0(7) > A  : R1(17) > B : BW > C   : SM > R0(7)
 9)                                           : BW > R1(8)
```

Signed two's complement subtraction of two 8 bit numbers located in RAM0 at address 7 - 0 and 15 - 8; the difference is accumulated back into addresses 16 - 8. Both source addresses in the same RAM bank is worst case for subtraction. (15-8) minus (7-0) = (16-8)

```
clock
cycle                                        mnemonics
```

```
     ;SAME AS ADDITION EXCEPT USE BORROW
 1)                       R0(8) > A
 2)  0 > D : 1 > M    : A > A       : R0(0) > B : 0 > C     : SM > R0(8)
 3)  0 > D : M > M    : R0(9) > A - :           : BW > C
 4)  0 > D : M > M    : A > A       : R0(1) > B : C > C     : SM > R0(9)
                          .
 5-14)           .   (cycles 3 & 4 repeated 5 times for bits 2 - 6)
                          .
 15) 0 > D : M > M    : R0(15) > A             : BW > C
 16) 0 > D : M > M    : A > A     : R0(7) > B : C > C    : SM > R0(15)
 17)                                          : BW > R0(16)
```

TABLE B (cont.)

*E.* ------- fixed point multiply:

Multiplication of two 8 bit positive integers located in RAM0, 7 - 0 and RAM0, 15 - 8; the 16 bit product is accumulated into RAM1, 15 - 0.

```
clock
cycle                                      mnemonics

        ;'AND' FIRST BIT OF MULTIPLIER WITH MULTIPLICAND, STORE SUM
 1)  0 > D : R0(0) > M
 2)  0 > D : M > M        : R0(8)  > A : 0 > B      : 0 > C      : SM > R1(0)
 3)  0 > D : M > M        : R0(9)  > A : 0 > B      : 0 > C      : SM > R1(1)
 4)  0 > D : M > M        : R0(10) > A : 0 > B      : 0 > C      : SM > R1(2)
 5)  0 > D : M > M        : R0(11) > A : 0 > B      : 0 > C      : SM > R1(3)
 6)  0 > D : M > M        : R0(12) > A : 0 > B      : 0 > C      : SM > R1(4)
 7)  0 > D : M > M        : R0(13) > A : 0 > B      : 0 > C      : SM > R1(5)
 8)  0 > D : M > M        : R0(14) > A : 0 > B      : 0 > C      : SM > R1(6)
 9)  0 > D : M > M        : R0(15) > A : 0 > B      : 0 > C      : SM > R1(7)

        ;'AND' MULTIPLIER BIT 2 WITH MULTIPLICAND, SHIFT AND ADD TO PREVIOUS SUM
10)  0 > D : R0(1) > M
11)  0 > D : M > M        : R0(8)  > A : R1(1) > B  : 0 > C      : SM > R1(1)
12)  0 > D : M > M        : R0(9)  > A : R1(2) > B  : CY > C     : SM > R1(2)
13)  0 > D : M > M        : R0(10) > A : R1(3) > B  : CY > C     : SM > R1(3)
14)  0 > D : M > M        : R0(11) > A : R1(4) > B  : CY > C     : SM > R1(4)
15)  0 > D : M > M        : R0(12) > A : R1(5) > B  : CY > C     : SM > R1(5)
16)  0 > D : M > M        : R0(13) > A : R1(6) > B  : CY > C     : SM > R1(6)
17)  0 > D : M > M        : R0(14) > A : R1(7) > B  : CY > C     : SM > R1(7)
18)  0 > D : M > M        : R0(15) > A : 0 > B      : CY > C     : SM > R1(8)
19)  0 > D : R0(2) > M                              : CY > R1(9)

        ;ETC. FOR EACH MULTIPLIER BIT
20)  0 > D : M > M        : R0(8)  > A : R1(2) > B  : 0 > C      : SM > R1(2)
21)  0 > D : M > M        : R0(9)  > A : R1(3) > B  : CY > C     : SM > R1(3)
22)  0 > D : M > M        : R0(10) > A : R1(4) > B  : CY > C     : SM > R1(4)
23)  0 > D : M > M        : R0(11) > A : R1(5) > B  : CY > C     : SM > R1(5)
24)  0 > D : M > M        : R0(12) > A : R1(6) > B  : CY > C     : SM > R1(6)
25)  0 > D : M > M        : R0(13) > A : R1(7) > B  : CY > C     : SM > R1(7)
26)  0 > D : M > M        : R0(14) > A : R1(8) > B  : CY > C     : SM > R1(8)
27)  0 > D : M > M        : R0(15) > A : R1(9) > B  : CY > C     : SM > R1(9)
28)  0 > D : R0(3) > M                              : CY > R1(10)
                .
29-36)          . (similar to 20-27 except using R1(3) through R1(10))
37)  0 > D : R0(4) > M                              : CY > R1(11)
                .
38-45)          . (similar to 20-27 except using R1(4) through R1(12))
46)  0 > D : R0(5) > M                              : CY > R1(12)
                .
47-54)          . (similar to 20-27 except using R1(5) through R1(13))
55)  0 > D : R0(6) > M                              : CY > R1(13)
                .
56-63)          . (similar to 20-27 except using R1(6) through R1(13))
64)  0 > D : R0(7) > M                              : CY > R1(14)

65)  0 > D : M > M        : R0(8)  > A : R1(7)  > B  : 0 > C     : SM > R1(7)
66)  0 > D : M > M        : R0(9)  > A : R1(8)  > B  : CY > C    : SM > R1(8)
67)  0 > D : M > M        : R0(10) > A : R1(9)  > B  : CY > C    : SM > R1(9)
68)  0 > D : M > M        : R0(11) > A : R1(10) > B  : CY > C    : SM > R1(10)
```

TABLE B (cont.)

```
69) 0 > D : M > M      : R0(12) > A : R1(11) > B : CY > C      : SM > R1(11)
70) 0 > D : M > M      : R0(13) > A : R1(12) > B : CY > C      : SM > R1(12)
71) 0 > D : M > M      : R0(14) > A : R1(13) > B : CY > C      : SM > R1(13)
72) 0 > D : M > M      : R0(15) > A : R1(14) > B : CY > C      : SM > R1(14)
73)                                              : CY > R1(15)
```

F. ------- fixed point divide :

Division of two 8 bit positive integers; the dividend in RAM1, 7 - 0, and the divisor in RAM0, 7 - 0; the integer portion of the quotient is accumulated into RAM0, 15 - 8. In this example the remainder is discarded. Division by zero is flagged by RAM0, bit 16 = 0. RAM1; 15 - 8 are scratch areas.

clock
cycle                                mnemonics
```
    ;SEE IF DIVISOR IS ZERO, R0(16)=0 IF 'Division by Zero'.
 1) 0 > D : 1 > M      : 0 > A    : R0(0) > B : 0 > C      : SM > R1(8)
 2) 0 > D : M > M      : A > A    : R0(1) > B : BW > C     : SM > R1(9)
 3) 0 > D : M > M      : A > A    : R0(2) > B : BW > C     : SM > R1(10)
 4) 0 > D : M > M      : A > A    : R0(3) > B : BW > C     : SM > R1(11)
 5) 0 > D : M > M      : A > A    : R0(4) > B : BW > C     : SM > R1(12)
 6) 0 > D : M > M      : A > A    : R0(5) > B : BW > C     : SM > R1(13)
 7) 0 > D : M > M      : A > A    : R0(6) > B : BW > C     : SM > R1(14)
 8) 0 > D : M > M      : A > A    : R0(7) > B : BW > C     : SM > R1(15)
 9)                                            : C > R0(16)
    ;ENABLE DIVIDE MODE (D=1), SUBTRACT DIVISOR/2 FROM DIVIDEND
10) 1 > D : 0 > M      : R1(7) > A  : R0(0) > B : 0 > C     : SM > R1(7)
11) 1 > D : M > M      : R1(8) > A  : R0(1) > B : CY > C    : SM > R1(8)
12) 1 > D : M > M      : R1(9) > A  : R0(2) > B : CY > C    : SM > R1(9)
13) 1 > D : M > M      : R1(10) > A : R0(3) > B : CY > C    : SM > R1(10)
14) 1 > D : M > M      : R1(11) > A : R0(4) > B : CY > C    : SM > R1(11)
  ) 1 > D : M > M      : R1(12) > A : R0(5) > B : CY > C    : SM > R1(12)
16) 1 > D : M > M      : R1(13) > A : R0(6) > B : CY > C    : SM > R1(13)
17) 1 > D : M > M      : R1(14) > A : R0(7) > B : CY > C    : SM > R1(14)
    ;PRETEND THAT R0(8) IS A ZERO (B=0)
18) 1 > D : M > M      : R1(15) > A : 0 > B : CY > C        : SM > R1(15)
    ;CARRY BIT IS COMPLEMENT OF QUOTIENT (COMPLEMENTED LATER)
19)                                            : CY > R0(15)
    ;THIS BIT CONTROLS WHETHER CY OR BW IS FED BACK (ADD OR SUBTRACT)
20) 1 > D : R0(15) > M
    ;ONE MORE BIT IS PICKED UP EACH ADD/SUBTRACT PASS
21) 1 > D : M > M      : R1(6) > A  : R0(0) > B : 0 > C     : SM > R1(6)
22) 1 > D : M > M      : R1(7) > A  : R0(1) > B : CY > C    : SM > R1(7)
23) 1 > D : M > M      : R1(8) > A  : R0(2) > B : CY > C    : SM > R1(8)
24) 1 > D : M > M      : R1(9) > A  : R0(3) > B : CY > C    : SM > R1(9)
25) 1 > D : M > M      : R1(10) > A : R0(4) > B : CY > C    : SM > R1(10)
26) 1 > D : M > M      : R1(11) > A : R0(5) > B : CY > C    : SM > R1(11)
27) 1 > D : M > M      : R1(12) > A : R0(6) > B : CY > C    : SM > R1(12)
28) 1 > D : M > M      : R1(13) > A : R0(7) > B : CY > C    : SM > R1(13)
29) 1 > D : M > M      : R1(14) > A : 0 > B : CY > C        : SM > R1(14)
30) 1 > D : M > M      : R1(15) > A : B > B : CY > C        : SM > R1(15)
31)                                            : CY > R0(14)
32) 1 > D : R0(14) > M
33) 1 > D : M > M      : R1(5) > A  : R0(0) > B : 0 > C     : SM > R1(5)
34) 1 > D : M > M      : R1(6) > A  : R0(1) > B : CY > C    : SM > R1(6)
```

TABLE B (cont.)

```
35)  1 > D : M > M     : R1(7)  > A  : R0(2) > B  : CY > C      : SM > R1(7)
36)  1 > D : M > M     : R1(8)  > A  : R0(3) > B  : CY > C      : SM > R1(8)
37)  1 > D : M > M     : R1(9)  > A  : R0(4) > B  : CY > C      : SM > R1(9)
38)  1 > D : M > M     : R1(10) > A  : R0(5) > B  : CY > C      : SM > R1(10)
39)  1 > D : M > M     : R1(11) > A  : R0(6) > B  : CY > C      : SM > R1(11)
40)  1 > D : M > M     : R1(12) > A  : R0(7) > B  : CY > C      : SM > R1(12)
41)  1 > D : M > M     : R1(13) > A  : 0 > B      : CY > C      : SM > R1(13)
42)  1 > D : M > M     : R1(14) > A  : B > B      : CY > C      : SM > R1(14)
43)  1 > D : M > M     : R1(15) > A  : B > B      : CY > C      : SM > R1(15)
44)                                              : CY > R0(13)
45)  1 > D : R0(13) > M
46)  1 > D : M > M     : R1(4)  > A  : R0(0) > B  : 0 > C       : SM > R1(4)
47)  1 > D : M > M     : R1(5)  > A  : R0(1) > B  : CY > C      : SM > R1(5)
48)  1 > D : M > M     : R1(6)  > A  : R0(2) > B  : CY > C      : SM > R1(6)
49)  1 > D : M > M     : R1(7)  > A  : R0(3) > B  : CY > C      : SM > R1(7)
50)  1 > D : M > M     : R1(8)  > A  : R0(4) > B  : CY > C      : SM > R1(8)
51)  1 > D : M > M     : R1(9)  > A  : R0(5) > B  : CY > C      : SM > R1(9)
52)  1 > D : M > M     : R1(10) > A  : R0(6) > B  : CY > C      : SM > R1(10)
53)  1 > D : M > M     : R1(11) > A  : R0(7) > B  : CY > C      : SM > R1(11)
54)  1 > D : M > M     : R1(12) > A  : 0 > B      : CY > C      : SM > R1(12)
55)  1 > D : M > M     : R1(13) > A  : B > B      : CY > C      : SM > R1(13)
56)  1 > D : M > M     : R1(14) > A  : B > B      : CY > C      : SM > R1(14)
57)  1 > D : M > M     : R1(15) > A  : B > B      : CY > C      : SM > R1(15)
58)                                              : CY > R0(12)
59)  1 > D : R0(12) > M
60)  1 > D : M > M     : R1(3)  > A  : R0(0) > B  : 0 > C       : SM > R1(3)
61)  1 > D : M > M     : R1(4)  > A  : R0(1) > B  : CY > C      : SM > R1(4)
62)  1 > D : M > M     : R1(5)  > A  : R0(2) > B  : CY > C      : SM > R1(5)
63)  1 > D : M > M     : R1(6)  > A  : R0(3) > B  : CY > C      : SM > R1(6)
64)  1 > D : M > M     : R1(7)  > A  : R0(4) > B  : CY > C      : SM > R1(7)
65)  1 > D : M > M     : R1(8)  > A  : R0(5) > B  : CY > C      : SM > R1(8)
66)  1 > D : M > M     : R1(9)  > A  : R0(6) > B  : CY > C      : SM > R1(9)
67)  1 > D : M > M     : R1(10) > A  : R0(7) > B  : CY > C      : SM > R1(10)
68)  1 > D : M > M     : R1(11) > A  : 0 > B      : CY > C      : SM > R1(11)
69)  1 > D : M > M     : R1(12) > A  : B > B      : CY > C      : SM > R1(12)
70)  1 > D : M > M     : R1(13) > A  : B > B      : CY > C      : SM > R1(13)
71)  1 > D : M > M     : R1(14) > A  : B > B      : CY > C      : SM > R1(14)
72)  1 > D : M > M     : R1(15) > A  : B > B      : CY > C      : SM > R1(15)
73)                                              : CY > R0(11)
74)  1 > D : R0(11) > M
75)  1 > D : M > M     : R1(2)  > A  : R0(0) > B  : 0 > C       : SM > R1(2)
76)  1 > D : M > M     : R1(3)  > A  : R0(1) > B  : CY > C      : SM > R1(3)
77)  1 > D : M > M     : R1(4)  > A  : R0(2) > B  : CY > C      : SM > R1(4)
78)  1 > D : M > M     : R1(5)  > A  : R0(3) > B  : CY > C      : SM > R1(5)
79)  1 > D : M > M     : R1(6)  > A  : R0(4) > B  : CY > C      : SM > R1(6)
80)  1 > D : M > M     : R1(7)  > A  : R0(5) > B  : CY > C      : SM > R1(7)
81)  1 > D : M > M     : R1(8)  > A  : R0(6) > B  : CY > C      : SM > R1(8)
82)  1 > D : M > M     : R1(9)  > A  : R0(7) > B  : CY > C      : SM > R1(9)
83)  1 > D : M > M     : R1(10) > A  : 0 > B      : CY > C      : SM > R1(10)
84)  1 > D : M > M     : R1(11) > A  : B > B      : CY > C      : SM > R1(11)
85)  1 > D : M > M     : R1(12) > A  : B > B      : CY > C      : SM > R1(12)
86)  1 > D : M > M     : R1(13) > A  : B > B      : CY > C      : SM > R1(13)
87)  1 > D : M > M     : R1(14) > A  : B > B      : CY > C      : SM > R1(14)
88)  1 > D : M > M     : R1(15) > A  : B > B      : CY > C      : SM > R1(15)
89)                                              : CY > R0(10)
90)  1 > D : R0(10) > M
91)  1 > D : M > M     : R1(1)  > A  : R0(0) > B  : 0 > C       : SM > R1(1)
92)  1 > D : M > M     : R1(2)  > A  : R0(1) > B  : CY > C      : SM > R1(2)
```

## TABLE B (cont.)

```
93) 1 > D : M > M    : R1(3)  > A : R0(2)  > B : CY > C      : SM > R1(3)
93) 1 > D : M > M    : R1(4)  > A : R0(3)  > B : CY > C      : SM > R1(4)
94) 1 > D : M > M    : R1(5)  > A : R0(4)  > B : CY > C      : SM > R1(5)
95) 1 > D : M > M    : R1(6)  > A : R0(5)  > B : CY > C      : SM > R1(6)
96) 1 > D : M > M    : R1(7)  > A : R0(6)  > B : CY > C      : SM > R1(7)
97) 1 > D : M > M    : R1(8)  > A : R0(7)  > B : CY > C      : SM > R1(8)
98) 1 > D : M > M    : R1(9)  > A : 0 > B      : CY > C      : SM > R1(9)
99) 1 > D : M > M    : R1(10) > A : B > B      : CY > C      : SM > R1(10)
100) 1 > D : M > M   : R1(11) > A : B > B      : CY > C      : SM > R1(11)
101) 1 > D : M > M   : R1(12) > A : B > B      : CY > C      : SM > R1(12)
102) 1 > D : M > M   : R1(13) > A : B > B      : CY > C      : SM > R1(13)
103) 1 > D : M > M   : R1(14) > A : B > B      : CY > C      : SM > R1(14)
104) 1 > D : M > M   : R1(15) > A : B > B      : CY > C      : SM > R1(15)
105)                                           : CY > R0(9)
106) 1 > D : R0(9) > M
107) 1 > D : M > M   : R1(0)  > A : R0(0)  > B : 0 > C       : SM > R1(0)
108) 1 > D : M > M   : R1(1)  > A : R0(1)  > B : CY > C      : SM > R1(1)
109) 1 > D : M > M   : R1(2)  > A : R0(2)  > B : CY > C      : SM > R1(2)
110) 1 > D : M > M   : R1(3)  > A : R0(3)  > B : CY > C      : SM > R1(3)
111) 1 > D : M > M   : R1(4)  > A : R0(4)  > B : CY > C      : SM > R1(4)
112) 1 > D : M > M   : R1(5)  > A : R0(5)  > B : CY > C      : SM > R1(5)
113) 1 > D : M > M   : R1(6)  > A : R0(6)  > B : CY > C      : SM > R1(6)
114) 1 > D : M > M   : R1(7)  > A : R0(7)  > B : CY > C      : SM > R1(7)
115) 1 > D : M > M   : R1(8)  > A : 0 > B      : CY > C      : SM > R1(8)
116) 1 > D : M > M   : R1(9)  > A : B > B      : CY > C      : SM > R1(9)
117) 1 > D : M > M   : R1(10) > A : B > B      : CY > C      : SM > R1(10)
118) 1 > D : M > M   : R1(11) > A : B > B      : CY > C      : SM > R1(11)
119) 1 > D : M > M   : R1(12) > A : B > B      : CY > C      : SM > R1(12)
120) 1 > D : M > M   : R1(13) > A : B > B      : CY > C      : SM > R1(13)
121) 1 > D : M > M   : R1(14) > A : B > B      : CY > C      : SM > R1(14)
122) 1 > D : M > M   : R1(15) > A : B > B      : CY > C      : SM > R1(15)
123)                                           : CY > C
     ;COMPLEMENT R0(8-15) TO GET TRUE QUOTIENT
124) 0 > D : 1 > M   : C > A      : 0 > B      : 1 > C       : SM > R0(8)
125) 0 > D : M > M   : R0(9)  > A : B > B      : C > C       : SM > R0(9)
126) 0 > D : M > M   : R0(10) > A : B > B      : C > C       : SM > R0(10)
127) 0 > D : M > M   : R0(11) > A : B > B      : C > C       : SM > R0(11)
128) 0 > D : M > M   : R0(12) > A : B > B      : C > C       : SM > R0(12)
129) 0 > D : M > M   : R0(13) > A : B > B      : C > C       : SM > R0(13)
120) 0 > D : M > M   : R0(14) > A : B > B      : C > C       : SM > R0(14)
131) 0 > D : M > M   : R0(15) > A : B > B      : C > C       : SM > R0(15)
```

## Claims

1. A serial video processor system for high-speed processing comprising:

an input (15) for receiving digitized, multi-bit signal data;
a linear array of one-bit serial processors (10), each processor having: an input register (30) connected to receive multiple bits of said multi-bit signal data in parallel from said input; an output register (42) connected to transfer multiple bits of processed data from the processor in parallel; a random access memory (33) having data inputs and outputs connected to said input and output registers and having an address input; a serial ALU (50) having a plurality of one-bit registers (56,57,58,59) and multiplexer means (61,62,63,64) to connect inputs and outputs of each of said registers to data inputs and outputs of said random access memory (33), the multiplexer means also connecting inputs and outputs of some of the registers to the serial ALU of adjacent processors in a linear sequence; control inputs (C) in common with all of said processors receiving control and address sets of bits to select operation of the multiplexer means and addressing of said random access memory (33) thereby to perform one-bit serial arithmetic/logic operations in each of the processors for each

18

set of control and address bits;

commutator means (32,49) addressing the input registers of said plurality of processors in a repeating sequence correlated with said signal data to load said multi-bit signal data from said input into said input registers; said commutator means also addressing the output registers of said plurality of processors in a repeating sequence to transfer processed multi-bit video data to an output (16);

control means (25) having a multi-bit parallel output connected in common to said control inputs of all of said processors to apply sequences of sets of control and address bits to said control inputs to result in high speed processing of said multi-bit signal data.

2. A system according to claim 1, said system being for real time processing of raster-scanned video, and wherein

said multi-bit signal data comprises multi-bit video data,
said plurality of serial processors comprises a plurality of serial video processors,
said random access memory comprises first and second random access memories, and
said commutator means is arranged to address the input and output registers in repeating sequence correlated with a raster-scan.

3. A system according to claim 2 wherein an analog system input is connected to said input through an analog-to-digital converter, and said output is connected to an analog system output through a digital-to analog converter.

4. A system according to claim 3 wherein said analog system input is sampled at a rate which is related to a multiple of the horizontal scan rate of said raster scan, said multiple being at least equal to the number of serial video processors.

5. A system according to claim 4 wherein there are at least as many of said serial video processors as there are pixels in a horizontal scan of said raster scan.

6. A system according to claim 2 wherein said first and second memories comprise a dynamic random access memory having one differential sense amplifier for each of the serial video processors.

7. A system according to claim 2 wherein said input register of each video processor includes a first set of bits connected to receive said multi-bit video data from said input and a second set of bits connected to outputs of a frame memory.

8. A system according to claim 7 wherein said output register of each video processor includes a first set of bits connected to transfer said multi-bit processed data from said video processor to said output and a second set of bits connected to transfer processed data to inputs of said frame memory.

9. A system according to claim 8 wherein there are at least as many of said serial video processors as the number of pixels in a horizontal scan of said raster scan, and there is a delay of at least one of said horizontal scans between input of video data to said input and output of processed data at said output.

10. A system according to claim 7, 8 or 9 wherein said frame memory stores processed video data for one frame of said raster scan.

11. A system according to any one of claims 2 to 10, in which said plurality of serial processors comprises a set of N serial video processors,

said commutator means has N stages addressing the input registers of said set of N serial video processors in a repeating sequence correlated with said raster scan to load said multi-bit video data from said input into said input registers; and said commutator means has N stages also addressing the output registers of said set of N serial video processors in a repeating sequence correlated with said raster scan to transfer processed multi-bit video data to an output; and
said set of processors and said commutator include by-pass means whereby selected ones of said serial video processors are omitted from operation of the device, the number N exceeding the number of processors needed for one line of said scan.

12. A system according to claim 11 when dependent from claim 2 wherein each of said first and second memories comprise a dynamic random access memory having a differential sense amplifier.

13. A system according to claim 11 when dependent from claim 2 wherein said input register of each video processor includes a first set of bits connected to receive said multi-bit video data in parallel from said input and a second set of bits connected in parallel to outputs of a frame memory.

14. A system according to claim 13 wherein said output register of each video processor includes a first set of bits connected to transfer in parallel said multi-bit processed data from said video processor to said output and a second set of bits connected to transfer processed data in parallel to inputs of a frame memory.

15. A system according to any one of the preceding claims wherein the or each random access memory has a number of bits many times the number of bits in said input and output registers.

16. A method of high-speed signal processing in a linear array of one-bit serial processors, said method comprising the steps of:

converting an input signal into multi-bit digital data at a sampling rate, and storing said digital data in a multiple bit manner in parallel in a set of input registers (20),

transferring the digital data in said registers to memory cells of a linear sequence of random access memories (33),

performing in each of said one-bit serial processors a plurality of serial arithmetic/logic operations on said digital data in adjacent ones of said sequence of random access memories (33), there being a corresponding one processor for each of said input registers,

transferring the processed digital data from said set of random access memories to a set of output registers (42), there being a number of said output registers corresponding to said number of input registers, and

transferring in a multiple bit manner in parallel said processed digital data from said output registers to an output.

17. A method according to claim 16, said method being for real time processing of a raster-scanned video signal,

said method including supplying a video signal as the number of said input registers corresponding to the number of pixels in a horizontal scan of the raster-scan, and

after the step of transferring the processed digital data to the set of the output registers, converting digital data in said output registers into an output video signal.

18. A method according to claim 17 including the steps of storing processed video data from said set of output registers in a frame memory containing a set of memory cells for each pixel of all of said horizontal scans in one vertical scan of the raster scan, and transferring the stored video data to said set of input registers in synchronization with the converting of the video signal, whereby the input registers contain data from the stored frame and also converted data for the current horizontal scan.

19. A method according to claim 17 wherein at least two of said horizontal scans occurs between said step of storing the digital data in the one of the set of input registers and said step of transferring digital data from the set of random access memories to said output register for a given pixel of one of said horizontal scans.

20. A method according to claim 16 including

after the converting step loading in parallel said digital data in a set of input registers,

transferring the digital data from said registers to a set of one-bit wide random access memories, these random access memories having a number of bits greatly exceeding the number of bits in one of said input registers, and

subsequently transferring the processed digital data one bit at a time from said set of random access memories to said set of output registers.

21. A method according to claim 20 including the steps of storing processed data from said set of output registers in a buffer memory for a period of time during which said input signal makes a complete cycle of a repeating sequence, and transferring the stored processed data to said set of input registers in synchronization with the converting of the input signal, whereby the input registers contain data from the buffer memory and also converted data for the current input signal.

**Patentansprüche**

1.  Serielles Videoprozessorsystem für Hochgeschwindigkeitsverarbeitung, mit:

    einem Eingang (15) zum Empfangen digitalisierten Mehrbit-Signaldaten;
    einer linearen Anordnung von seriellen Einbit-Prozessoren (10), wobei jeder Prozessor besitzt: ein Eingangsregister (30), das so angeschlossen ist, daß es vom Eingang mehrere Bits der Mehrbit-Signaldaten parallel empfängt; ein Ausgangsregister (42), das so angeschlossen ist, daß es mehrere Bits verarbeiteter Daten vom Prozessor parallel überträgt; einen Schreib-Lese-Speicher (33) mit Dateneingängen und -ausgängen, die an die Eingangs- und Ausgangsregister angeschlossen sind, und einem Adresseneingang; eine serielle ALU (50) mit mehreren Einbit-Registern (56, 57, 58, 59) und eine Multiplexereinrichtung (61, 62, 63, 64), die die Eingänge und Ausgänge jedes der Register mit Dateneingängen und -ausgängen des Schreib-Lese-Speichers (33) verbindet, wobei die Multiplexereinrichtung außerdem Eingänge und Ausgänge einiger der Register mit der seriellen ALU benachbarter Prozessoren in einer linearen Reihenfolge verbindet; Steuereingänge (C), die sämtlichen Prozessoren gemeinsam sind und Steuer- und Adressensätze von Bits empfangen, um die Operation der Multiplexereinrichtung zu wählen und um den Schreib-Lese-Speicher (33) zu adressieren, um dadurch für jeden Satz von Steuer- und Adressenbits serielle Einbit-Arithmetik/Logikoperationen in jedem der Prozessoren auszuführen;
    einer Umschalteinrichtung (32, 49), die die Eingangsregister der mehreren Prozessoren in einer mit den Signaldaten korrelierten Wiederholungsreihenfolge adressiert, um die Mehrbit-Signaldaten vom Eingang in die Eingangsregister zu laden; wobei die Umschalteinrichtung auch die Ausgangsregister der mehreren Prozessoren in einer Wiederholungsreihenfolge adressiert, um verarbeitete Mehrbit-Videodaten an einen Ausgang (16) zu übertragen;
    einer Steuereinrichtung (25) mit einem parallelen Mehrbit-Ausgang, der an die Steuereingänge sämtlicher Prozessoren angeschlossen ist, um Folgen von Sätzen von Steuer- und Adressenbits in die Steuereingänge einzugeben, um eine Hochgeschwindigkeitsverarbeitung der Mehrbit-Signaldaten zu erhalten.

2.  System nach Anspruch 1, wobei das System für eine Echtzeitverarbeitung von Rasterabtastvideosignalen ausgelegt ist und wobei

    die Mehrbit-Signaldaten Mehrbit-Videodaten enthalten,
    die mehreren seriellen Prozessoren mehrere serielle Videoprozessoren enthalten,
    der Schreib-Lese-Speicher einen ersten und einen zweiten Schreib-Lese-Speicher enthält und
    die Umschalteinrichtung so beschaffen ist, daß sie die Eingangs- und Ausgangsregister in einer Wiederholungsreihenfolge adressiert, die mit einer Rasterabtastung korreliert ist.

3.  System nach Anspruch 2, in dem ein analoger Signaleingang über einen Analog/Digital-Umsetzer an den Eingang angeschlossen ist und der Ausgang über einen Digital/Analog-Umsetzer an einen analogen Systemausgang angeschlossen ist.

4.  System nach Anspruch 3, in dem der analoge Systemeingang mit einer Rate abgetastet wird, die mit einem Vielfachen der horizontalen Abtastrate der Rasterabtastung in Beziehung steht, wobei das Vielfache wenigstens gleich der Anzahl der seriellen Videoprozessoren ist.

5.  System nach Anspruch 4, in dem wenigstens so viele serielle Videoprozessoren vorhanden sind, wie in einer horizontalen Abtastung der Rasterabtastung Pixel vorhanden sind.

6.  System nach Anspruch 2, in dem der erste Speicher und der zweite Speicher einen dynamischen Schreib-Lese-Speicher mit einem differentiellen Leseverstärker für jeden der seriellen Videoprozessoren enthalten.

7.  System nach Anspruch 2, in dem das Eingangsregister jedes Videoprozessors einen ersten Satz von Bits, die so angeschlossen sind, daß sie die Mehrbit-Videodaten vom Eingang empfangen, sowie einen zweiten Satz von Bits, die an die Ausgänge eines Rahmenspeichers angeschlossen sind, enthält.

8.  System nach Anspruch 7, in dem das Ausgangsregister jedes Videoprozessors einen ersten Satz von Bits, die so angeschlossen sind, daß sie die verarbeiteten Mehrbit-Daten vom Videoprozessor an den Ausgang übertragen, sowie einen zweiten Satz von Bits, die so angeschlossen sind, daß sie verarbeitete Daten an Eingänge des Rahmenspeichers übertragen, enthält.

9. System nach Anspruch 8, in dem wenigstens so viele serielle Videoprozessoren vorhanden sind, wie in einer horizontalen Abtastung der Rasterabtastung Pixel vorhanden sind, und zwischen der Eingang von Videodaten in den Eingang und dem Ausgang von verarbeiteten Daten vom Ausgang eine Verzögerung um wenigstens eine der horizontalen Abtastungen vorhanden ist.

10. System nach Anspruch 7, 8 oder 9, in dem der Rahmenspeicher verarbeitete Videodaten für einen Rahmen der Rasterabtastung speichert.

11. System nach irgendeinem der Ansprüche 2 bis 10, in dem die mehreren seriellen Prozessoren einen Satz von N seriellen Videoprozessoren enthalten,

die Umschalteinrichtung N Stufen besitzt, die die Eingangsregister des Satzes von N seriellen Videoprozessoren in einer mit der Rasterabtastung korrelierten Wiederholungsreihenfolge adressieren, um die Mehrbit-Videodaten vom Eingang in die Eingangsregister zu laden; und die Umschalteinrichtung N Stufen besitzt, die auch die Ausgangsregister des Satzes von N seriellen Videoprozessoren in einer mit der Rasterabtastung korrelierten Wiederholungsreihenfolge adressieren, um verarbeitete Mehrbit-Videodaten an einen Ausgang zu übertragen; und
der Satz von Prozessoren und die Umschalteinrichtung eine Umgehungseinrichtung enthalten, wodurch ausgewählte der seriellen Videoprozessoren nicht an der Operation der Vorrichtung teilnehmen, wobei die Anzahl N die Anzahl der für eine Zeile der Abtastung erforderlichen Prozessoren übersteigt.

12. System nach Anspruch 11, wenn abhängig von Anspruch 2, in dem sowohl der erste Speicher als auch der zweite Speicher einen dynamischen Schreib-Lese-Speicher mit einem differentiellen Leseverstärker enthält.

13. System nach Anspruch 11, wenn abhängig von Anspruch 2, in dem das Eingangsregister jedes Videoprozessors einen ersten Satz von Bits, die so angeschlossen sind, daß sie die Mehrbit-Videodaten vom Eingang parallel empfangen, sowie einen zweiten Satz von Bits, die an Ausgänge eines Rahmenspeichers parallel angeschlossen sind, enthält.

14. System nach Anspruch 13, in dem das Ausgangsregister jedes Videoprozessors einen ersten Satz von Bits, die so angeschlossen sind, daß sie die verarbeiteten Mehrbit-Daten vom Videoprozessor parallel an den Ausgang übertragen, sowie einen zweiten Satz von Bits, die so angeschlossen sind, daß sie verarbeitete Daten parallel an Eingänge eines Rahmenspeichers übertragen, enthält.

15. System nach irgendeinem der vorangehenden Ansprüche, in dem der oder jeder Schreib-Lese-Speicher eine Anzahl von Bits besitzt, die ein Vielfaches der Anzahl der Bits in den Eingangs- und Ausgangsregistern ist.

16. Verfahren zur Hochgeschwindigkeits-Signalverarbeitung in einer linearen Anordnung von seriellen Einbit-Prozessoren, wobei das Verfahren die folgenden Schritte enthält:

Umsetzen eines Eingangssignals in digitale Mehrbit-Daten mit einer Abtastrate und Speichern der digitalen Daten in bitparalleler Weise in einem Satz von Eingangsregistern (20),
Übertragen der digitalen Daten in den Registern an Speicherzellen einer linearen Folge von Schreib-Lese-Speichern (33),
Ausführen mehrerer serieller Arithmetik/Logikoperationen an den digitalen Daten in benachbarten der Folgen von Schreib-Lese-Speichern (33) in jedem der seriellen Einbit-Prozessoren, wobei für jedes der Eingangsregister ein entsprechender Prozessor vorhanden ist,
Übertragen der verarbeiteten digitalen Daten von dem Satz von Schreib-Lese-Speichern an einen Satz von Ausgangsregistern (42), wobei eine der Anzahl von Eingangsregistern entsprechende Anzahl von Ausgangsregistern vorhanden ist,
Übertragen der verarbeiteten digitalen Daten in bitparalleler Weise von den Ausgangsregistern an einen Ausgang.

17. Verfahren nach Anspruch 16, das für eine Echtzeitverarbeitung eines Rasterabtastvideosignals ausgelegt ist,

wobei das Verfahren das Anlegen eines Videosignals an eine Anzahl der Eingangsregister, die der Anzahl der Pixel in einer horizontalen Abtastung der Rasterabtastung entspricht, und nach dem Schritt des Übertragens der verarbeiteten digitalen Daten an den Satz von Ausgangsregistern das Umsetzen der digitalen Daten in den Ausgangsregistern in ein Ausgangsvideosignal umfaßt.

18. Verfahren nach Anspruch 17, mit den Schritten des Speichern der verarbeiteten Videodaten aus dem Satz von Ausgangsregistern in einen Rahmenspeicher, der einen Satz von Speicherzellen für jedes Pixel sämtlicher horizontaler Abtastungen in einer Vertikalabtastung der Rasterabtastung enthält, und Übertragen der gespeicherten Videodaten an den Satz von Eingangsregistern synchron mit der Umsetzung des Videosignals, wobei die Eingangsregister Daten aus dem gespeicherten Rahmen und außerdem umgesetzte Daten für die aktuelle horizontale Abtastung enthalten.

19. Verfahren nach Anspruch 17, in dem zwischen dem Schritt des Speicherns der digitalen Daten in dem einen Satz von Eingangsregistern und dem Schritt des Übertragens digitaler Daten von dem Satz von Schreib-Lese-Speichern an das Ausgangsregister für ein gegebenes Pixel einer der horizontalen Abtastungen wenigstens zwei horizontale Abtastungen auftreten.

20. Verfahren nach Anspruch 16, das enthält:

nach dem Umsetzungsschritt paralleles Laden der digitalen Daten in einen Satz von Eingangsregistern, Übertragen der digitalen Daten von den Registern an einen Satz von Schreib-Lese-Speichern mit Einbit-Breite, wobei die Speicher eine Anzahl von Bits besitzen, die die Anzahl von Bits in einem der Eingangsregister stark übersteigt, und
anschließendes Übertragen der verarbeiteten digitalen Daten bitweise von dem Satz von Schreib-Lese-Speichern an den Satz von Ausgangsregistern.

21. Verfahren nach Anspruch 20, mit den Schritten des Speicherns verarbeiteter Daten von dem Satz von Ausgangsregistern in einem Pufferspeicher für eine Zeitperiode, während der das Eingangssignal einen vollständigen Zyklus einer Wiederholungsreihenfolge durchläuft, und des Übertragens der gespeicherten verarbeiteten Daten an den Satz von Eingangsregistern synchron mit der Umsetzung des Eingangssignals, wobei die Eingangsregister Daten vom Pufferspeicher und außerdem umgesetzte Daten für das aktuelle Eingangssignal enthalten.

**Revendications**

1. Système de processeur vidéo série pour un traitement à grande vitesse, comprenant :

une entrée (15) pour recevoir des données numérisées de signaux à bits multiples ;
un réseau linéaire de processeurs série à un bit (10), chaque processeur comportant : un registre d'entrée (30) connecté de manière à recevoir des bits multiples desdites données de signaux à bits multiples en parallèle à partir de ladite entrée ; un registre de sortie (42 raccordé pour transférer en parallèle des bits multiples de données traitées provenant du processeur ; une mémoire à accès sélectif (33) comportant des entrées et des sorties de données connectées auxdits registres d'entrée et de sortie et possédant une entrée d'adresse ; une unité arithmétique et logique en série (50) comportant une pluralité de registres à un bit (56, 57, 58, 59) et des moyens formant multiplexeurs (61, 62, 63, 64) pour connecter des entrées et des sorties de chacun desdits registres à des entrées et des sorties de données de ladite mémoire à accès sélectif (33), les moyens formant multiplexeurs connectant également des entrées et des sorties de certains des registres à l'unité arithmétique et logique en série de processeurs adjacents, selon une séquence linéaire ; des entrées de commande (C), en commun avec l'ensemble desdits processeurs, recevant des ensembles de bits de commande et d'adressage pour sélectionner le fonctionnement des moyens formant multiplexeurs et adresser ladite mémoire à accès sélectif (33) de manière à exécuter des opérations arithmétiques/logiques en série à un bit dans chacun des processeurs pour chaque ensemble de bits de commande et d'adressage ;
des moyens de commutation (32, 49) adressant les registres d'entrée de ladite pluralité de processeurs selon une séquence répétitive corrélée auxdites données de signaux pour charger lesdites données de signaux à bits multiples provenant de ladite entrée dans lesdits registres d'entrée ; lesdits moyens de commutation adressant également les registres de sortie de ladite pluralité de processeurs selon une séquence répétitive pour transférer des données vidéo traitées à bits multiples à une sortie (16) ;
des moyens de commande (25) possédant une sortie en parallèle à bits multiples connectés en commun auxdites entrées de commande de l'ensemble dudit processeur pour appliquer des séquences d'ensembles de bits de commande et d'adressage auxdites entrées de commande pour obtenir un traitement à grande vitesse desdites données de signaux à bits multiples.

2. Système selon la revendication 1, ledit système servant à réaliser le traitement en temps réel d'un signal vidéo à balayage de trame, et dans lequel

lesdites données de signaux à bits multiples comprennent des données vidéo à bits multiples,
ladite pluralité de processeurs série comprend une pluralité de processeurs vidéo série,
ladite mémoire à accès sélectif comprend des première et seconde mémoires à accès sélectif, et
lesdits moyens de commutation sont agencés de manière à adresser les registres d'entrée et de sortie selon une séquence répétitive corrélée à un balayage de trame.

3. Système selon la revendication 2, dans lequel un signal d'entrée analogique du système est appliqué à ladite entrée par l'intermédiaire d'un convertisseur analogique/ numérique, et ladite sortie est connectée à une sortie analogique du système par l'intermédiaire d'un convertisseur numérique/analogique.

4. Système selon la revendication 3, dans lequel ledit signal analogique d'entrée du système est échantillonné à une cadence qui est associée à un multiple de la cadence de balayage horizontale dudit balayage de trame, ledit multiple étant au moins égal au nombre de processeurs vidéo série.

5. Système selon la revendication 4, dans lequel il existe au moins un nombre au moins aussi élevé desdits processeurs vidéo série qu'il existe de pixels dans un balayage horizontal dudit balayage de trame.

6. Système selon la revendication 2, dans lequel lesdites première et seconde mémoires comprennent une mémoire dynamique à accès sélectif comportant un amplificateur différentiel de détection pour chacun des processeurs vidéo en série.

7. Système selon la revendication 2, dans lequel ledit registre d'entrée de chaque processeur vidéo comprend un premier ensemble de bits connectés de manière à recevoir lesdites données vidéo à bits multiples provenant de ladite entrée et un second ensemble de bits connectés à des sorties d'une mémoire de trames.

8. Système selon la revendication 7, dans lequel ledit registre de sortie de chaque processeur vidéo comprend un premier ensemble de bits connectés pour transférer lesdites données traitées à bits multiples provenant dudit processeur vidéo à ladite sortie et un second ensemble de bits connectés pour transférer les données traitées à des entrées de ladite mémoire de trames.

9. Système selon la revendication 8, dans lequel il est prévu un nombre au moins aussi élevé desdits processeurs de signaux vidéo en série qu'il existe de pixels dans un balayage horizontal dudit balayage de trame et qu'il existe un retard égal à au moins l'un desdits balayages horizontaux entre l'entrée de données vidéo et ladite entrée et ladite sortie des données traitées sur ladite sortie.

10. Système selon la revendications 7, 8 ou 9, dans lequel ladite mémoire de trames mémorise des données vidéo traitées pour une trame dudit balayage de trame.

11. Système selon l'une quelconque des revendications 2 à 10, dans lequel ladite pluralité de processeurs série comprend un ensemble de N processeurs vidéo série,

lesdits moyens de commutation comprennent N étages qui adressent les registres d'entrée dudit ensemble de N processeurs vidéo série selon une séquence répétitive corrélée audit balayage de trame pour charger lesdites données vidéo à bits multiples provenant de ladite entrée dans lesdits registres d'entrée ; lesdits moyens de commutation comprennent N étages qui adressent également les registres de sortie dudit ensemble de N processeurs vidéo série selon une séquence répétitive corrélée audit balayage de trame pour transférer des données vidéo à bits multiples traitées à une sortie ; et
ledit ensemble de processeurs et ledit commutateur comprennent des moyens de contournement, grâce à quoi certains sélectionnés desdits processeurs vidéo série sont retirés du fonctionnement du dispositif, le nombre N dépassant le nombre de processeurs nécessaires pour une ligne dudit balayage.

**12.** Système selon la revendication 11, considéré comme dépendante de la revendication 2, dans lequel chacune desdites première et seconde mémoires comprend une mémoire dynamique à accès sélectif comportant un amplificateur différentiel de détection.

**13.** Système selon la revendication 11, considéré comme dépendante de la revendication 2, dans lequel ledit registre d'entrée de chaque processeur vidéo comprend un premier ensemble de bits connectés de manière à recevoir en parallèle lesdites données vidéo à bits multiples provenant de ladite entrée et un second ensemble de bits connectés en parallèle à des sorties d'une mémoire de trames.

**14.** Système selon la revendication 13, dans lequel ledit registre de sortie de chaque processeur vidéo comprend un premier ensemble de bits connectés pour transférer en parallèle lesdites données traitées à bits multiples depuis ledit processeur vidéo à ladite sortie et un second ensemble de bits connectés pour transférer en parallèle des données traitées à des entrées d'une mémoire de trames.

**15.** Système selon l'une quelconque des revendications précédentes, dans lequel la ou chaque mémoire à accès sélectif possède un nombre de bits égal à un multiple élevé du nombre de bits dans lesdits registres d'entrée et de sortie.

**16.** Procédé de traitement de signaux à grande vitesse dans un réseau linéaire de processeurs en série à un bit, ledit procédé comprenant les étapes consistant à :

convertir un signal d'entrée en des données numériques à bits multiples à une fréquence d'échantillonnage, et mémoriser lesdites données numériques selon un mode à bits multiples en parallèle dans un ensemble de registres d'entrée (30),
transférer les données numériques dans lesdits registres à des cellules de mémoire d'une séquence linaire de mémoires à accès sélectif (33),
exécuter dans chacun desdits processeurs série à un bit un pluralité d'opérations arithmétiques/analogiques en série sur lesdites données numériques dans des mémoires adjacentes faisant partie de ladite séquence de mémoires à accès direct (33), un processeur correspondant étant prévu pour chacun desdits registres d'entrée,
transférer les données numériques traitées provenant dudit ensemble de mémoires à accès sélectif à un ensemble de registres de sortie (42), lesdits registres de sortie étant présents en un nombre correspondant audit nombre de registres d'entrée, et
transférer en parallèle, selon un mode à bits multiples, lesdites données numériques traitées provenant desdits registres de sortie à une sortie.

**17.** Procédé selon la revendication 16, ledit procédé étant utilisé pour le traitement en temps réel d'un signal vidéo à balayage de trame,

ledit procédé comprenant l'envoi d'un signal vidéo à un nombre desdits registres d'entrée, qui correspond au nombre de sorties dans un balayage horizontal du balayage de trame, et
après l'étape de transfert des données numériques traitées à l'ensemble des registres de sortie, convertir des données numériques situées dans lesdits registres de sortie en un signal vidéo de sortie.

**18.** Procédé selon la revendication 17, comprenant les étapes consistant à mémoriser des données vidéo traitées provenant dudit ensemble de registres de sortie, dans une mémoire de trames contenant un ensemble de cellules de mémoire pour chaque pixel de l'ensemble desdits balayages horizontaux dans un balayage vertical du balayage de trame, et transférer les données vidéo mémorisées dans ledit ensemble de registres d'entrée d'une manière synchrone avec la conversion du signal vidéo, ce qui a pour effet que les registres d'entrée contiennent des données provenant de la trame mémorisées et également des données converties pour le balayage horizontal actuel.

**19.** Procédé selon la revendication 17, selon lequel au moins deux desdits balayages horizontaux apparaît entre ladite étape de mémorisation des données numériques dans l'un des registres de l'ensemble de registres d'entrée et ladite étape de transfert de données numériques depuis l'ensemble de mémoires à accès sélectif audit registre de sortie pour un pixel donné de l'un desdits balayages horizontaux.

**20.** Procédé selon la revendication 16 comprenant

après l'étape de conversion, le chargement en parallèle desdites données numériques dans un ensemble de registres d'entrée,

le transfert des données numériques depuis lesdits registres à un ensemble de mémoires à accès direct d'une largeur d'un bit, ces mémoires possédant un nombre de bits dépassant largement le nombre de bits dans l'un desdits registres d'entrée, et

le transfert ultérieur, à raison d'un bit à la fois, des données numériques traitées depuis ledit ensemble de mémoires à accès direct audit ensemble de registres de sortie.

21. Procédé selon la revendication 20, comprenant les étapes consistant à mémoriser des données traitées provenant dudit ensemble de registres de sortie dans une mémoire tampon pendant un intervalle de temps, pendant lequel ledit signal d'entrée exécute un cycle complet d'une séquence répétitive, et à transférer les données traitées mémorisées audit ensemble de registres d'entrée en synchronisme avec la conversion du signal d'entrée, ce qui a pour effet que les registres d'entrée contiennent des données provenant de la mémoire tampon et également des données converties pour le signal d'entrée actuel.

Fig. 1

Fig. 2

Fig. 3

Fig. 4

*Fig. 5*

*Fig. 6*

EP 0 317 218 B1

Fig. 7